# EUROPEAN PATENT APPLICATION

(11) **EP 4 790 501 A1**
(43) Date of publication of application: **12.08.2026**
(21) Application number: 25156544.6
(22) Date of filing: 07.02.2025
(51) Int. Cl.: G05B 23/02, G06N 3/00

(54) **AGENT-BASED INDUSTRIAL DRIVE ERROR DIAGNOSIS USING RETRIEVAL AUGMENTED GENERATION**

(71) Applicant: ABB SCHWEIZ AG, 5400 Baden (CH)
(72) Inventor: RITTER, Marcus, 64297 Darmstadt (DE); ASHIWAL, Virendra, 68542 Heddesheim (DE); PALACIO, Sebastian, 69221 Dossenheim (DE); SCHOCH, Nicolai, 69120 Heidelberg (DE)
(74) Representative: Maiwald GmbH

(57) **Abstract**

There is disclosed a method for automating a process of error diagnosis of an industrial drive product in an industrial context. The method comprises obtaining (S610), by a generative artificial intelligence, Al, agent, a notification that is associated with an error occurred at the industrial drive product; retrieving (S620), by the generative Al agent, a plurality of pieces of information from one or more data sources, wherein the plurality of pieces of information is associated with the industrial drive product; determining (S630), by the generative Al agent and for a piece of information of the plurality of pieces of information, a relevance in relation to the error; for pieces of information of the plurality of pieces of information that are determined to have a relevance above a predetermined relevance threshold, augmenting (S640), by the generative Al agent, the pieces of information; and generating (S650), by the generative Al agent, a proposal for handling the error based on the augmented pieces of information.

## Description

### FIELD OF THE INVENTION

The invention relates to agent-based industrial drive error diagnosis using retrieval augmented generation. In more detail, the invention relates to a method for automating a process of error diagnosis of an industrial drive product in an industrial context. The invention further relates to a data processing apparatus, a data processing system, an industrial plant, a computer-readable medium, a computer program product and a use.

### BACKGROUND

Efficient diagnosis and resolution of errors in industrial drives or industrial drive products are crucial to maintaining the productivity of industrial customers. Currently, when industrial drives become non-functional or show reduced performance, customers must manually diagnose the issue, assuming they possess the necessary technical expertise. Typically, the only resource available to troubleshoot a malfunctioning industrial drive is the industrial drive's (firmware) manual. However, in many cases, the manual does not provide an immediate solution based on the error code displayed or the symptoms of the problem. Consequently, customers are often required to contact customer support to collaboratively resolve the issue, a process that can be time-consuming and challenging.

In more detail, an industrial drive is an electronic device used to control the speed, torque, and direction of an electric motor in industrial applications, enhancing efficiency and performance in processes like manufacturing or automation. It typically adjusts motor output based on varying operational demands. Industrial customers often use such industrial drives in combination with a variety of encoders for different industrial use cases, for example, Conveyor Systems, CNC Machines, Cranes and Hoists, or Robotics applications. Generally, an encoder is a sensor that provides feedback on the position, speed, and direction of a motor's shaft, enabling precise control in industrial drives. It helps improve the accuracy and efficiency of motor-driven systems by continuously monitoring motion parameters.

If such a setup stops working, the industrial drive, as the component controlling the motor and reading information from the encoders, usually displays one or several error codes. There might be also scenarios where the industrial drive does not show any error code. In this case the customer, for example, a commissioning engineer can only try to describe the problem based on the changed behavior of the setup, such as a reduced motor speed or the motor not running at all. Based on this information, next the engineer needs to consult the manual of the industrial drive, potentially also the manuals of the encoders or motors used in combination with the industrial drive. If there is information available in the industrial drive's manual for this specific error code or information that matches the problem description of the setup's behavior, the engineer can try to fix the problem manually by following the information and steps described in the industrial drive manual. If there is, however, no information provided for this error code or information that matches the problem description, then the only other option is to contact the customer support of the industrial drives manufacturer.

Diagnosing a problem based on its symptoms requires a certain level of technical expertise from the customer, which they may not possess. Additionally, the customer must manually search the specific industrial drive's manual, first locating the manual and then searching for the relevant error code. These manuals are often hundreds of pages long; therefore, it is easy to overlook some important information. Furthermore, for many of the error codes there might be no solution available in the provided industrial drive manual from the manufacturer. Instead, customer is required to call or contact customer service to resolve the issue with assistance. In this scenario, it is assumed that the customer has sufficient technical knowledge to describe the problem accurately, enabling support staff to suggest potential solutions. If customer support is unavailable and the situation is time-sensitive, the customer may resort to a trial-and-error approach to diagnose and solve the issue, which can be hazardous. In fact, for many of the potential industrial drive errors there are no instructions available in the manual. This is because the errors can have complex causes that depend on the customer's setup, used hardware, software, and many other factors. Consequently, expert knowledge is required to troubleshoot and solve such problems.

Hence, in an industrial application context, there is the problem of how to improve error diagnosis and/or error troubleshooting for errors occurred for/in an industrial drive.

Hence, there is room and need for improvement in error diagnosis and/or error troubleshooting for errors occurred at an industrial drive in an industrial context.

### SUMMARY

In view of the above, it is an object of the present disclosure to overcome at least part of the drawbacks available regarding the improvement in error diagnosis and/or error troubleshooting for errors occurred for/in an industrial drive in an industrial context.

Therefore, to address one or more of these drawbacks, there is provided, in a first aspect, a method for automating, in an industrial context, a process of error diagnosis in an industrial drive or industrial drive product. The method comprises obtaining, by a generative artificial intelligence, Al, agent, a notification that is associated with an error occurred at the industrial drive product. The method further comprises retrieving, by the generative Al agent, a plurality of pieces of information from one or more data sources, wherein the plurality of pieces of information is associated with the industrial drive product. The method further comprises determining, by the generative Al agent and for a piece of information of the plurality of pieces of information, a relevance in relation to the error. The method further comprises, for pieces of information of the plurality of pieces of information that are determined to have a relevance above a predetermined relevance threshold, augmenting, by the generative Al agent, the pieces of information. And the method further comprises generating, by the generative Al agent, a proposal for handling the error based on the augmented pieces of information.

Preferably, the method is computer-implemented.

It shall be noted that throughout the present disclosure, the terms 'agent', 'Al agent', 'generative Al agent', 'LLM agent' or 'DriveAIAgent' are intended to comprise or to be understood as meaning an 'LLM-based generative Al agent'. The 'DriveAIAgent' may comprise a group of 'generative Al agents'.

An industrial drive or industrial drive product is an electronic device used to control the speed, torque, and direction of an electric motor in industrial applications, enhancing efficiency and performance in processes like manufacturing or automation. It typically adjusts motor output based on varying operational demands. Industrial customers often use such drives in combination with a variety of encoders for different industrial use cases, e.g., Conveyor Systems, CNC Machines, Cranes and Hoists, or Robotics applications. Generally, an encoder is a sensor that provides feedback on the position, speed, and direction of a motor's shaft, enabling precise control in industrial drives. It helps improve the accuracy and efficiency of motor-driven systems by continuously monitoring motion parameters.

A generative Al agent as used herein can have one or more language models, like Large Language Models (LLMs) or Small Language Models (SMLs), and reasoning capability, which means that the generative Al agent has the capabilities to reason over a given goal. For example, the generative Al agent has a given goal, instructions, memory, history of decisions, and anything else which is needed to reason over a given goal. Further, the generative Al agent may have one or more tool accesses, which means that the generative Al agent may access external tools and/or may access internal tools, where a tool performs (or allows the generative Al agent to perform) one or more actions on a given or provided input.

The notification may be, for example, an error message, an alarm/warning message, an anomaly, a user input in relation to the error, or plain text comprising information in relation to the error etc. The error may be, for example, a drive error, a warning error or a maintenance error. The expression "obtaining the notification" is explained in even more detail further below.

The term "retrieving" may also be understood as acquiring, requesting and/or downloading. The expression "retrieving from one or more data sources" is explained in even more detail further below.

The term "relevance" may comprise, for example, a classification into two or more predetermined relevance categories, wherein the predetermined relevance categories may be hierarchically ordered according to their respectively given relevance. For example, in case there are three predetermined relevance categories, one of the predetermined relevance categories may be given the relevance "high" (or may represent a "high" relevance), one of the predetermined relevance categories may be given the relevance "medium" (or may represent a "medium" relevance), and one of the predetermined relevance categories may be given the relevance "low" (or may represent a "low" relevance). For example, in case there may be a temperature warning for an industrial drive product, to diagnose or check the industrial drive product's cooling system may be of "high" relevance.

The predetermined relevance threshold may be a threshold that divides the two or more predetermined relevance categories into a first part of predetermined relevance categories and a second part of predetermined relevance categories. For example, the first part may comprise the predetermined relevance categories "high" and "medium", wherein the second part may comprise the predetermined relevance category "low".

The expression "augmenting" as used herein may be understood as enhancing the capabilities of an agent by providing it some information or tools to i) adapt to new scenarios and/or ii) respond more detailed and/or iii) provide more up to date information.

A generated proposal for handling the error may comprise, for example, one or more actions or processing steps that are proposed to a user to troubleshoot the error.

The method according to the first aspect is advantageous in that it may participate in enabling to reduce the reliance on human customer support from industrial drive manufacturers, streamlining the error resolution process and thus improving customer experience and satisfaction. In more detail, errors can be automatically analyzed and identified solutions or proposals can then be applied to proceed with the industrial drive product or an encoder configuration (of the industrial drive product). Use cases may be automated drive error diagnosis and/or as a black box (providing output based on given input) as part of an automated encoder configuration. Moreover, productivity may increase due to less downtime of industrial drive products and productivity may increase due to improved performance of industrial drive products. Anomaly detection may be improved, for example a detection of drive problems before they occur, and (as part of anomaly detection for example) reduced drive performance may be detected. Error/performance diagnosis may be triggered, and maintenance may be triggered automatically. In addition, customers can diagnose drive errors faster, better, and easier. Hence, customer satisfaction may be increased. Furthermore, less personal customer support would be required, since problems can be diagnosed, where the customer previously had no other option than to contact customer support. It may further be created a knowledge database of customer knowledge for industrial drive products and drive & encoder setups, and it may be grown a knowledge database for drive error solutions and performance improvement.

According to several examples of the present disclosure, the obtaining the notification may comprise at least one of:
- retrieving an error code from the industrial drive product, the error code associated with the error,
- retrieving a log from the industrial drive product, the log associated with the error,
- obtaining an image showing at least a portion of the industrial drive product, the portion associated with the error,
- obtaining a video showing at least a portion of the industrial drive product, the portion associated with the error,
- obtaining an image showing an error message associated with the error,
- obtaining a sound or sound record associated with the error,
- obtaining descriptive text associated with the error, and
- obtaining a user speech associated with the error.

The image and/or video may have been captured by a user, for example, who has identified a potential error. For example, the image and/or video may show a display of the industrial drive product at which texts and/or symbols are shown. For example, the image and/or video may show shining or blinking warning lights. For example, the image and/or video may show a liquid or steam leaking from the industrial drive product. For example, the video may show at least part of an operational process of the industrial drive product. In doing so, for example, the video may show an undesired vibration of the industrial drive product. Similar, the sound or sound record may be the sound or sound record that occurs from such undesired vibration, for example. The user speech may be an oral or verbal description of a potential error, the oral or verbal description made by a user.

Hence, different types of notification in different formats may be considered, alone or in combination. In doing so, a comprehensive and, ideally almost, complete description or definition of the error is obtained, gained or collected. Thus, error diagnosis is improved.

According to several examples of the present disclosure, the retrieving from the one or more data sources may comprise at least one of:
- retrieving from the industrial drive product,
- retrieving from one or more databases,
- retrieving from one or more documents,
- retrieving from one or more video records, and
- retrieving from one or more sound records.

Thus, the one or more data sources may at least one of industrial drive product, one or more databases, one or more documents, one or more video records, one or more sound records. For example, a database may be a database at which historical operational data are stored. For example, a document may be a manual. For example, a video record may be a demonstration video or tutorial video. For example, a sound record may be a sound record from a startup process tutorial or a video record.

Hence, different types of data sources may be considered, alone or in combination. In doing so, a comprehensive and, ideally almost, complete knowledge of potential candidate solutions is obtained, gained or collected. Thus, error diagnosis is improved.

According to several examples of the present disclosure, the retrieving from the one or more data sources may further comprise: retrieving metadata associated with the retrieved plurality of pieces of information, wherein the metadata are indicative of information on the one or more data sources from which the plurality of pieces of information was retrieved.

For example, the metadata may indicate a page or paragraph in a manual, a time range in a video record or sound record, an information from which expert user a textual information was provided, etc.

Hence, comprehensiveness, reliability, trustworthiness and a degree of completeness with regard to the knowledge used to generate potential candidate solutions is even further improved. Thus, error diagnosis is further improved.

According to several examples of the present disclosure, the determining may further comprise determining the relevance further based on:
- a drive type of the industrial drive product, and/or
- an error code associated with the error, wherein the error code is included in a user input made by a user in response to the error and/or is identified by the generative Al agent from the retrieved plurality of pieces of information.

For example, the error code may be a code that is provided by a manufacturer of the industrial drive product, for example it may be provided in a manual of the industrial drive product. The error code may be, for example, at least one of a numerical value, one or more keywords or a lightning pattern of indicator lights. Additionally or alternatively, the error code may be output by the industrial drive product, for example via a display at the industrial drive product or a notification message sent by or triggered by the industrial drive product. Hence, there are several ways how the user may gain knowledge of or receive the error code. Additionally or alternatively, the generative Al agent, after having retrieved the plurality of pieces of information from the one or more data sources, may identify one or more potential error code candidates based on the retrieved plurality of pieces of information. This may be done based on a similarity search for example. Further, based on a result from such identification for example, the generative Al agent may assign relevancies to the retrieved plurality of pieces of information.

Here, the term "error code" is to be understood in a broad way. For example, the term error code is meant to comprise a certain code, for example numerical values, as already indicated above. However, the term error code may also comprise a blinking or lightning of one or more indicator lights so that the one or more indicator lights may be understood to represent a "code" that is mappable or comparable (for example based on a similarity search) to one or more potential errors. Similar, the term error code may also comprise textual information so that the textual information may be understood to represent a "code" that is mappable or comparable (for example based on a similarity search) to one or more potential errors.

Hence, diagnosis or proposals that may not be suitable to explain or solve an identified error may be avoided or excluded already before the generation process. Thus, the process of solution generation is increased efficiency and error diagnosis is further improved.

According to several examples of the present disclosure, the determining may further comprise: evaluating a piece of information of the plurality of pieces of information against information derivable from at least one of the user input, the drive type of the industrial drive product, different pieces of information of the plurality of pieces of information, the log from the industrial drive product, and the error code; and determining the relevance based on the evaluating.

The evaluating may be based on a similarity search.

Hence, diagnosis or proposals that may not be suitable to explain or solve an identified error may be avoided or excluded already before the generation process. Thus, the process of solution generation is increased efficiency and error diagnosis is further improved.

According to several examples of the present disclosure, the method may further comprise obtaining, by the generative Al agent, relevance threshold configuration information indicative of at least two predetermined relevance categories of different relevancies, of predetermined classification criteria and of a setting of the predetermined relevance threshold. Determining the relevance for the piece of information may further comprise classifying the piece of information into one relevance category of the at least two predetermined relevance categories based on the predetermined classification criteria; and determining whether the one relevance category has a relevance above the predetermined relevance threshold based on the setting of the predetermined relevance threshold.

For example, as already indicated above, the at least two predetermined relevance categories may be hierarchically ordered according to their respectively given relevance. For example, in case there are three predetermined relevance categories, one of the predetermined relevance categories may be given the relevance "high" (or may represent a "high" relevance), one of the predetermined relevance categories may be given the relevance "medium" (or may represent a "medium" relevance), and one of the predetermined relevance categories may be given the relevance "low" (or may represent a "low" relevance). For example, in case there may be a temperature warning for an industrial drive product, to diagnose or check the industrial drive product's cooling system may be of "high" relevance. A piece of information may then be classified into the "high" relevance category, the "medium" relevance category or the "low" relevance category. The predetermined relevance threshold may then define that all pieces of information in a category below the "high" relevance category, that is pieces of information classified as "medium" relevance or "low" relevance, are to be omitted or are not to be considered any further.

The predetermined classification criteria may comprise classification criteria or classification rules configured, for example by an expert user, for the generative Al agent to consider by the generative Al agent when performing the determining or the classification. Additionally or alternatively, the generative Al agent may adjust the predetermined classification criteria by itself, based on received user feedback on provided classification results for example.

Hence, diagnosis or proposals that may not be suitable to explain or solve an identified error may be avoided or excluded already before the generation process. Thus, the process of solution generation is increased efficiency and error diagnosis is further improved.

According to several examples of the present disclosure, the augmenting the pieces of information may comprise at least one of:
- removing white space,
- rephrasing one or more syntaxes according to predetermined syntax rephrasing criteria,
- formatting one or more syntaxes according to predetermined syntax formatting criteria,
- removing duplicate information, and
- combining information that have a similarity above a predetermined similarity threshold.

Hence, due to the augmenting, a more efficient and comprehensive generation of potential solutions is enabled. Thus, the process of proposal generation is increased efficiency and error diagnosis is further improved.

According to several examples of the present disclosure, the generating the proposal for handling the error may further comprise generating the proposal further based on at least one of the user input, the drive type of the industrial drive product and the error code.

Hence, the proposal is linked to at least one of the user input, the drive type of the industrial drive product, and the error code. Thus, error diagnosis is further improved.

According to several examples of the present disclosure, the generative Al agent may be a first generative Al agent of a group of generative Al agents. The method may further comprise providing, by the first generative Al agent, the generated proposal to at least a second generative Al agent of the group of generative Al agents for at least the second generative Al agent to refine the generated proposal.

It shall be noted that in the group of generative Al agents, one or more generative Al agents may parallelly extract relevant information from various data sources. Further, different generative Al agents may have different tasks and may thus use different tools for different processing steps. For example, there may be one or more generative Al agents for processing textual information, there may be one or more generative Al agents for processing image data, and there may be one or more generative Al agents for processing numerical values. One or more generative Al agents may be hierarchically structured, so that there may be a monitoring or managing generative Al agent that controls one or more other generative Al agents. One or more pieces of information may be processed by one generative Al agent or may be processed jointly or commonly by one or more generative Al agents. For example, an output from a first generative Al agent is further processed by a second generative Al agent and third generative Al agent and then completed again by the first generative Al agent. Hence, among one or more generative Al agents, there may be different perspectives of resolving errors and more than one generative Al agent may be working for a (candidate) solution, and then at the end a generative Al agent (that may have a task to merge (candidate) solutions), for example either by its own tool or by itself without tool or by asking a user, may merge or evaluate these various outputs to find one or more most suitable results.

Hence, error diagnosis is further improved.

According to several examples of the present disclosure, the method may further comprise providing, by the generative Al agent, the generated proposal or the refined generated proposal to a user; and receiving, by the generative Al agent, feedback from the user on the generated proposal or on the refined generated proposal. And the method may further comprise performing at least one of the following by the generative Al agent based on the received feedback:
- updating the generated proposal or the refined generated proposal,
- generating a follow-up proposal to the generated proposal or to the refined generated proposal, and
- automatically executing the generated proposal or the refined generated proposal.

Hence, due to the consideration of the feedback from the user, a reliability, suitability or trustworthiness of the error diagnosis is further improved.

According to several examples of the present disclosure, the generating the proposal may comprise generating one or more proposals; and wherein the providing the generated proposal or the refined generated proposal to the user may comprise providing the generated one or more proposals or the refined generated one or more proposal to the user.

Hence, since more than just one proposal is provided to a user for example, wherein each of the proposals may be associated with a respective probability value (determined by the generative Al agent), wherein the probability value indicates a probability that the solution is suitable for handling the error, a reliability, suitability or trustworthiness of the error diagnosis is further improved.

According to several examples of the present disclosure, the method may further comprise: implementing a logging system; and logging, by the generative Al agent and/or by one or more generative Al agents of the group of generative Al agents, in the logging system progresses made by the generative Al agent and/or by one or more generative Al agents of the group of generative Al agents in performing the augmenting and/or the generating.

Hence, a knowledge base of the one or more generative Al agents is increased, so that a quality of the generated proposals may be improved. Hence, a reliability, suitability or trustworthiness of the error diagnosis is further improved.

According to several examples of the present disclosure, the method may further comprise selecting, by the generative Al agent and/or by one or more generative Al agents of the group of generative Al agents, one or more tools from a predetermined set of tools for performing at least one of the retrieving, the determining, the augmenting the generating and the updating.

Hence, and generative Al agent may select a tool that is most suitable to perform the task that the generative Al agent was given. Hence, a quality of the generated proposals is improved.

According to a second aspect, there is provided a data processing apparatus. The data processing apparatus comprises one or more processors being configured to carry out the method of the first aspect.

According to a third aspect, there is provided a data processing system. The data processing system comprises a data processing apparatus of the second aspect. Additionally or alternatively, the data processing system comprises means for carrying out the method of the first aspect.

According to a fourth aspect, there is provided an industrial plant comprising a data processing apparatus of the second aspect and/or a data processing system of the third aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

According to a seventh aspect, there is provided a use of at least one of a method according to the first aspect, a data processing apparatus according to the second aspect, a data processing system according to the third aspect, an industrial plant according to the fourth aspect, a computer-readable medium according to the fifth aspect, and a computer program product according to the sixth aspect.

Each of the data processing apparatus according to the second aspect, the data processing system according to the third aspect, the industrial plant according to the fourth aspect, the computer-readable medium according to the fifth aspect, the computer program product according to the sixth aspect and the use according to the seventh aspect is advantageous in several ways. Namely, each of these aspects is advantageous in that it may participate in enabling to reduce the reliance on human customer support from industrial drive manufacturers, streamlining the error resolution process and thus improving customer experience and satisfaction. In more detail, errors can be automatically analyzed and identified solutions or proposals can then be applied to proceed with the industrial drive product or an encoder configuration (of the industrial drive product). Use cases may be automated drive error diagnosis and/or as a black box (providing output based on given input) as part of an automated encoder configuration. Moreover, productivity may increase due to less downtime of industrial drive products and productivity may increase due to improved performance of industrial drive products. Anomaly detection may be improved, for example a detection of drive problems before they occur, and (as part of anomaly detection for example) reduced drive performance may be detected. Error/performance diagnosis may be triggered, and maintenance may be triggered automatically. In addition, customers can diagnose drive errors faster, better, and easier. Hence, customer satisfaction may be increased. Furthermore, less personal customer support would be required, since problems can be diagnosed, where the customer previously had no other option than to contact customer support. It may further be created a knowledge database of customer knowledge for industrial drive products and drive & encoder setups, and it may be grown a knowledge database for drive error solutions and performance improvement.

Optional features of the first aspect may form part of any of the second to seventh aspects, mutatis mutandis.

The computer-readable medium of the fifth aspect may have stored thereon the computer program product of the sixth aspect.

The term "obtaining", as used herein, may comprise, for example, receiving from another system, apparatus, (Al/ML) model, generative Al agent, or process; receiving via an interaction with a user; loading or retrieving from storage or memory; measuring or capturing using sensors or other data acquisition apparatuses; receiving, augmenting or acquiring as a result from one or more data processing steps.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates an example overview of an extended RAG process with an additional step for agent-based information relevancy ranking according to several examples of the present disclosure;
- Figure 2 illustrates an example overview of an error diagnosis process flow and an underlying logging functionality utilized according to several examples of the present disclosure;
- Figure 3 illustrates an example overview of a group of agents that utilize a hierarchical structure to work together to solve a given task according to several examples of the present disclosure;
- Figure 4 illustrates exemplary tools available to a data retrieval agent that it can use to fulfill its task according to several examples of the present disclosure;
- Figure 5 illustrates an example visualization of a data role access model for data sensitive RAG for generative Al according to several examples of the present disclosure;
- Figure 6 illustrates a flowchart indicative of a method according to several examples of the present disclosure; and
- Figure 7 illustrates a block diagram schematically showing a data processing apparatus according to several examples of the present disclosure.

### DETAILED DESCRIPTION

Efficient diagnosis and resolution of errors in industrial drives or industrial drive products (also referred to as 'drives' in the following) are crucial to maintaining the productivity of industrial customers. Currently, when industrial drives become non-functional or show reduced performance, customers must manually diagnose the issue, assuming they possess the necessary technical expertise. Typically, the only resource available to troubleshoot a malfunctioning drive is the drive's (firmware) manual. However, in many cases, the manual does not provide an immediate solution based on the error code displayed or the symptoms of the problem. Consequently, customers are often required to contact customer support to collaboratively resolve the issue, a process that can be time-consuming and challenging.

In view thereof, according to several examples of the present disclosure, this problem may be solved by leveraging the capabilities of large language models (LLMs) in conjunction with an agent-based approach that utilizes retrieval augmented generation to automate the process of drive error diagnosis. Hence, according to several examples of the present disclosure, a proposed (LLM-based) generative Al agent (also referred to as 'agent' in the following) may be tailored to meet the requirements for industrial use cases and its customers, for example, with regard to transparency, traceability, and safety. Therefore, according to several examples of the present disclosure, there is disclosed a generative Al agent that may also be referred to as 'DriveAIAgent' in the following.

According to several examples of the present disclosure, based on a few pieces of information, that is for example a type of the industrial drive, its manufacturer, available error codes, and/or a problem description, which may be provided by the customer, the DriveAlAgent may determine the most likely solution for an error that occurred at the industrial drive or in relation to the industrial drive. The DriveAlAgent may then either execute corrective actions autonomously or guide the customer through the process, ensuring all necessary safety precautions are taken. This approach aims to reduce the reliance on human customer support from industrial drive manufacturers, streamlining the error resolution process and thus improving customer experience and satisfaction.

In more detail, according to several examples of the present disclosure, diagnosing a problem at an industrial drive based on its symptoms requires a certain level of technical expertise from the customer, which they may not possess. Additionally, the customer must manually search a specific drive's manual, first locating the manual and then searching for the relevant error code. These manuals are often hundreds of pages long; therefore, it is easy to overlook some important information. Furthermore, for many of the error codes there might be no solution available in the provided drive manual from the manufacturer. Instead, a customer is required to call or contact customer service to resolve the issue with assistance. In this scenario, it is assumed that the customer has sufficient technical knowledge to describe the problem accurately, enabling support staff to suggest potential solutions. If customer support is unavailable and the situation is time-sensitive, the customer may resort to a trial-and-error approach to diagnose and solve the issue, which can be hazardous. In fact, for many of the potential drive errors there are no instructions available in the manual. This is because the errors can have complex causes that depend on the customer's setup, used hardware, software, and many other factors. Consequently, expert knowledge is required to troubleshoot and solve such problems.

In view thereof, according to several examples of the present disclosure, there is provided a solution to this problem that leverages existing knowledge sources from drive manufacturers, such as drive manuals, and their customers, such as data of past support cases and their solutions, using Retrieval Augmented Generation (RAG) to provide this information to an agent-based generative Al approach that may automate the process of diagnosing industrial drive errors.

According to several examples of the present disclosure, the power of large language models (LLMs) and their generative capabilities should be harnessed to automate the process of drive error diagnosis. However, LLMs, such as GPT4, are simply not experts on industrial drive products. As resources and data may not be available to train or fine-tune a novel language model for the task of industrial drive error diagnosis, there is disclosed herein according to several examples to employ Retrieval Augmented Generation (RAG), a commonly used tool to enhance language models by combining external information retrieval with generative text creation, enabling more accurate and contextually relevant responses. The external knowledge that can be utilize for this task are for example, but are not limited to, the drive manuals provided by the manufacturers of the drives, the manuals of the encoders and motors used together with the drive, any information of past customer support cases, e.g., email conversations on troubleshooting specific drive errors.

Furthermore, there are several challenges that arise even when using LLMs to solve one or more of these problems.

Namely, for example, not all the gathered information might be useful for a specific drive problem at hand. Identifying which information is useful and which is not is a difficult task that cannot be done manually or even using advanced NLP techniques.

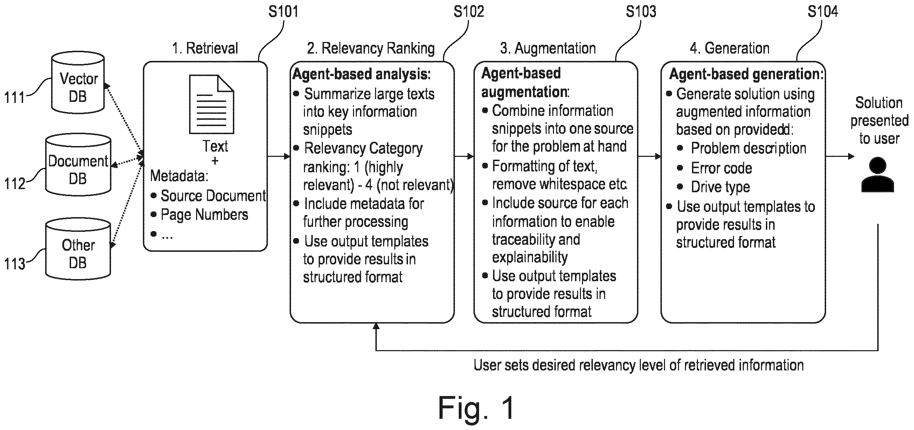

In view thereof, according to several examples of the present disclosure, there is introduced an additional step into the RAG process to use an LLM, such as GPT4 (others are possible), to perform a relevancy determination and/or relevancy ranking of available (e.g. the gathered) information. For example, information may be categorized or classified into a predetermined number of two or more categories, for example for categories: highly relevant, relevant, somewhat relevant, and not relevant. The user can influence which level of relevancy an information snippet has to have to be considered by the agent. Figure 1 outlines this extended RAG process.

In more detail, Figure 1 illustrates an example overview of an extended RAG process with an additional step for agent-based information relevancy ranking according to several examples of the present disclosure. After the retrieval stage S101 of the information from different data sources (could be also controlled by the user) like from a vector database (DB) 111, a document DB 112 or any other DB 113, there is performed an agent-based relevancy ranking S102 of retrieved information using the above-mentioned relevancy scale for example. The agent can summarize large chunks of text into key information snippets making sure to also include its metadata, for example, from which source (document or database) the data is coming for ensuring the explainability of the agents' provided solutions. In the third step, there is performed augmentation S103, thereby removing unnecessary white space, formatting syntax, remove duplicate information, and combine similar information for example. Again, it is made sure to include metadata and use templating instructions to provide consistent and structured output. In the last stage, it is generated S104 an answer or proposal for the problem at hand by utilizing the augmented information and templates for the solution output.

Another challenge that may need to be faced is the challenge of data sensitivity. Since part of the information that the solution as disclosed according to several examples of the present disclosure may use will come from industrial customers, it may be important to facilitate that sensitive data is not exposed to entities that should not have access to this data. For example, information from previous customer support cases can be key to identify potential solutions for a drive error problem at hand. However, not every customer might want that his information is used for an error diagnosis of another customer.

In view thereof, according to several examples of the present disclosure, the disclosed agent framework may feature a role access model for customer data that controls the agents access and the access of the spawned agents (including RAG process) to the available customer and other sensitive data sources.

Another challenge that may need to be faced for the drive error diagnosis is a consistency of one or more provided solutions, more specifically its correctness and explainability. When using an LLM to propose solutions for drive problems, it may be needed to make sure that the output of the framework is trustworthy and can be explained based on the source information that was provided to the language models. It may be needed to minimize the risk of hallucinations and ensure that all relevant and important information from the data sources, such as the drive manuals, will be present in the provided answer. Furthermore, it may be needed to make sure that the LLM approach will not suggest the customer to perform any unsafe steps to solve the problem.

In view thereof, according to several examples of the present disclosure, there is provided an agentic approach to employ evaluation and feedback loops using several LLM agents together to refine LLM output until it reaches the requirements for explainability and correctness.

Another challenge that may need to be faced is that the process of the solution identification may need to be transparent and comprehensible to enable a human intervention at any point in time. A customer might not have the required knowledge to perform some of the actions suggest by the proposed solution alone or he might prefer to contact customer support. Hence, when he contacts customer support, they need to be able to take over were the agent stopped performing any actions or the last performed action by the customer.

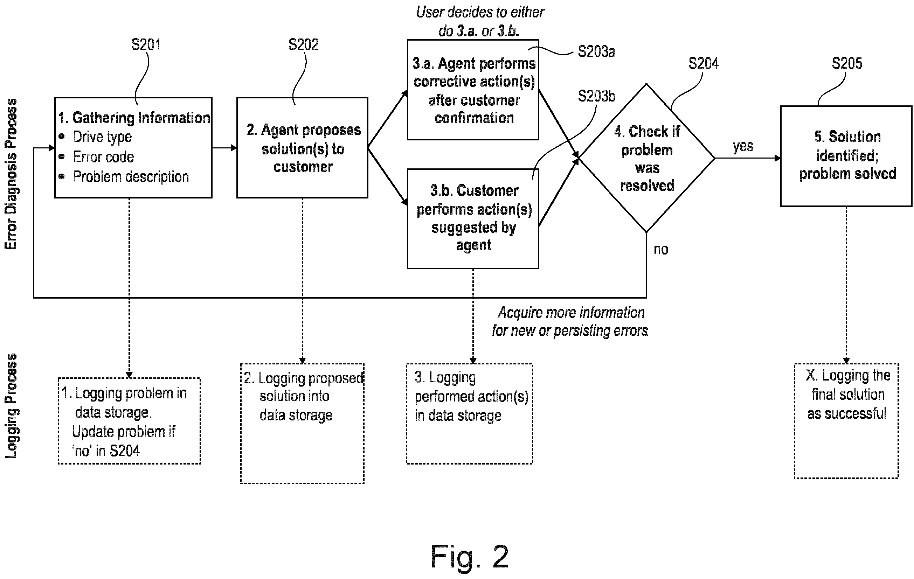

In view thereof, according to several examples of the present disclosure, there may be implemented a logging system that logs all the progress of the customer support case, i.e., in which stage of the process the agent(s) or system is, for example, information gathering. Figure 2 outlines the error diagnosis process and the different stages of the process.

In more detail, Figure 2 illustrates an example overview of an error diagnosis process flow and an underlying logging functionality utilized according to several examples of the present disclosure. Furthermore, it shows the information that may be logged according to several examples of the present disclosure at each stage of the process. At the beginning of the process for example, in S201, it may be summarized the problem at hand, and it may be stored in a data storage. Once the agent-based framework has suggested a first solution in S202, the solution may also be stored in the data storage. In S203b, a user may either perform some of the proposed corrective actions by himself or, in S203a, let the agent perform them. Similarly, as for the proposed solution it is also logged the performed corrective actions. In S204 it is checked if the problem was resolved, and, if 'yes', the final solution is identified in S205. If 'no', the process returns to S201, and further information may be gathered. The information and data logged in the data storage allow to make the entire process of error diagnosis more transparent and explainable.

Hence, the above-outlined logging mechanism may also make the disclosed solution easily detectable. Data logging as described above may allow to improve transparency, traceability, and explainable Al. Therefore, it can easily be detected based on the logs of the application, the logged information including the data flow. It can also be detected the group of agents working with each other on a task, as any combination of agents will create a very distinct and recognizable pattern in the log data. Furthermore, it may be logged the input and output of each interaction of the user with the DriveAlAgent. Meaning, it may be logged the given drive problem and the created agent output (solution). Additionally, it may be logged each output generated by an agent and the respective tools it uses. In combination with the data flow logs of the agent interactions, these resemble unique data patterns that can be easily detected and can be used for further analysis if required.

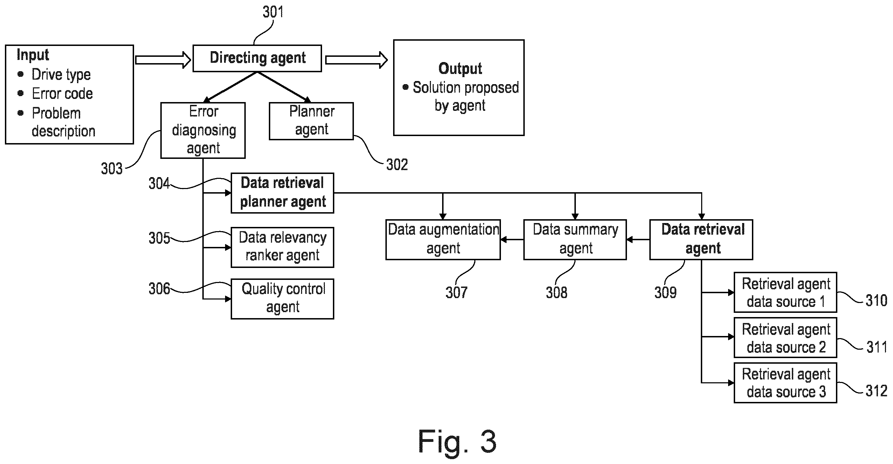

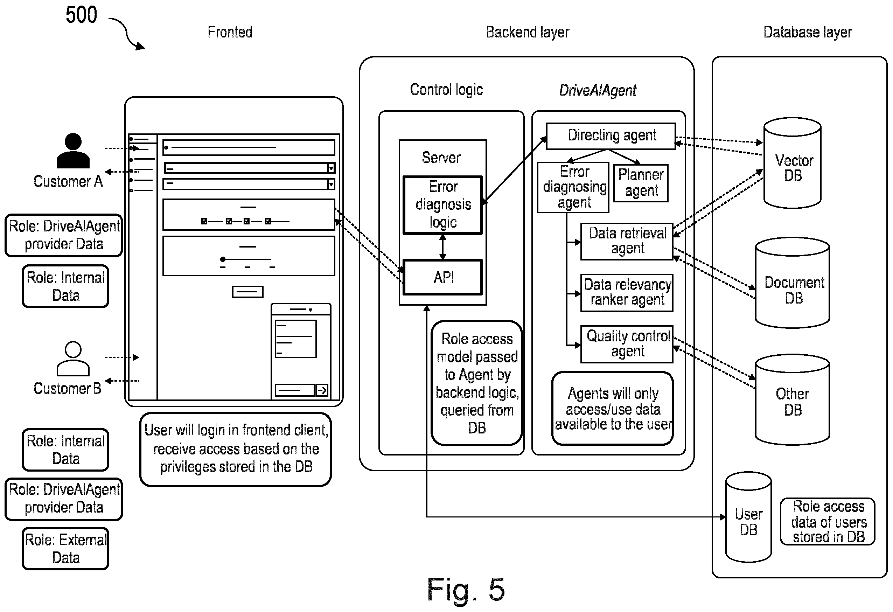

To tackle these challenges, no single instances of an LLM may be used for each specific task that is needed to be performed. Instead, according to several examples of the present disclosure, it may be employed an agentic approach, meaning that is used a variety of LLM agents that may work alone or together as a group to automate the error diagnosis process, where an agent is simply an Al system that leverages a LLM to autonomously perform tasks, make decisions, and interact with users based on natural language inputs. Figure 3 outlines such an agentic approach for the task of error diagnosis of industrial drives. In more detail, Figure 3 illustrates an example overview of a group of agents that utilize a hierarchical structure to work together to solve a given task according to several examples of the present disclosure. Figure 3 shows only some of the possible combinations of agents that can be used to solve a problem. The agents utilize a hierarchical structure to organize themselves and work together on the given task. There may be one directing agent 301 that is in charge and spawns as many other agents as needed to solve the given problem. This agent involves a dedicated planner agent 302 for example, which job it may be to reason which steps must be performed to complete the given task. Now an error diagnosis agent 303 might have further sub-agents, such as a dedicated agent (data retrieval planner agent) 304 for data retrieval or an agent (data relevancy ranking agent 305) that will later rank the relevancy of the information retrieved and given to it by another agent or a quality control agent 306. This data retrieval planner agent 304 again might have other sub-ordinate agents that are specialized on data retrieval from specific data sources, such as databases or documents. For example, as illustrated in Figure 3, such sub-ordinate agents may be a data augmentation agent 307, a data summary agent 308 and a data retrieval agent 309, wherein the data retrieval agent 309 might have further sub-ordinate agents like several retrieval agents 310, 311 and 312. Will some agents work with each other and pass their information between each other, other agents will only pass on their information to agent ranking higher in the hierarchy then themselves. Furthermore, some of the agents might have memory, wherein for others this may not be required to solve the task which was assigned to them. It shall be noted that the group of agents as shown in Figure 3, i.e. the agents 301 to 312, may be understood to represent (at least part of) such DriveAlAgent as mentioned above and as indicated in Figure 5 in the backend layer, for example.

The idea behind this agentic design is to break down complex problems into simpler tasks that can be accomplished by an agent, i.e., and LLM more easily. At the same time this break down of the tasks makes it easier to evaluate the outcome of a task and improve it if necessary.

The agentic solution as disclosed according to several examples of the present disclosure for the industrial drive error diagnosis may take a drive type, error code and/or problem description from a user as an input for example and may then suggest potential save solutions to the customer, thereby eliminating a need for customer support personal.

For example, customers will interact with the DriveAlAgent via an App on their smartphone, tablet or PC/Laptop. Interaction could be either via texting or speech. The customer may first provide the type of the drive to the agent. Then in addition he may provide the error code (if available) or the symptoms of the problem.

According to several examples of the present disclosure, based on this information, the agent may perform a planning step to identify the necessary steps to solve the problem. After identifying these steps, it will decide how many agents need to be deployed for the individual tasks and which tools they will need to use. For example, one agent might be responsible for checking if the manual of the identified drive type is available in the system. Depending on the result of this task, which will be send to a proxy agent (the DriveAlAgent, which may be the main agent performing the coordination and planning of all other subordinate agents) the proxy agent will decide on further actions. For example, such actions could be to use another tool to obtain a drive manual that is not yet in the system and automatically acquire and save all its data in the systems database, so it can then be used by another agent. After identifying the most likely solution for the problem, the agent will either perform it by itself or suggest it to the customer.

Depending on the error, according to several examples of the present disclosure, the DriveAlAgent might be able to trigger corrective actions by itself without any intervention required by the customer, e.g., in case of faulty parameter settings. For example, in case a required action might be safety critical, the agent will advise the customer to use appropriate safety measures or to contact customer support and/or additional support for further actions. If the proposed solution did not solve the problem, the agent may try to obtain as much further information from the customer as possible and then again try to suggest the likeliest one or more solutions, preferably the likeliest one solution, using the previously described process.

Each action of the agents, their progress, as well as a final solution, e.g., if the problem could be solved or not, may be logged in a data storage, as described before. This enables an informed human intervention at any point in time, which is key for safety critical applications in relation to error diagnosis.

Furthermore, the solution as disclosed according to several examples of the present disclosure features extended RAG capabilities. Since the manuals of the drives may be one of the major data sources for the agent-based solution proposal system, there are proposed several RAG functionalities that harness the power of LLMs to supply the agent with an optimal data input to find a solution for the given drive error. First, the agent may extract the entire text data from each available drive manual, embed it, and store it in a vector database. This enables to perform a similarity search based on the problem description provided by the user. Second, the agent may use Optical character recognition (OCR) to identify information stored in tables, such as warning and fault codes, which are specifically relevant for this use case. The agent also embeds this data and stores it in a vector database to enable similarity search. Third, the agent extracts the information of the table of contents of each document to enable a toc-based search using LLMs to identify interesting pieces of information on specific pages of the document for the given problem. The agent may then perform the previously described relevancy ranking of the retrieved information as shown in Figure 1.

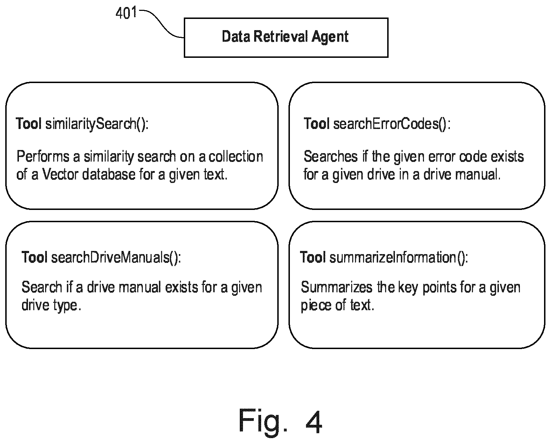

According to several examples of the present disclosure, there is disclosed an LLM-based agent, also referred to as 'DriveAIAgent', for an automated drive error diagnosis utilizing extended RAG functionality that may enable or realize the features as outlined below in more detail under items 1 to 7:
1. It can be spawned multiple agents (a group of agents) working together on different tasks to identify the best solution for a given drive problem (error code and/or symptoms), as schematically illustrated in Figure 3;
2. It may be used a hierarchical system to define how agents interact with each other based on their defined role in this system and the tasks that are given to them, as schematically illustrated in Figure 3. Depending on the tasks the agents need to accomplish, they can use a hierarchical system or not. So, any other way of interaction is also possible.
3. It is enabled tool usage and selection. The agents can use a set of provided tools to fulfill their tasks, e.g., to query relevant data from similar customer support cases from a (joint) database, siloed databases, or to search for relevant information in a drive manual. Depending on the state of the support case at hand and the available information the agent group may independently decide when to use which tool. Figure 4 outlines an example of tools that can be available to an agent to perform its tasks. In more detail, Figure 4 illustrates exemplary tools available to a data retrieval agent 401 that it can use to fulfill its task according to several examples of the present disclosure. Here a data retrieval agent 401 can use, for example, a similarity search tool, i.e., a function to query pieces of information from a vector database that are most like a given input text. The data retrieval agent 401 according to Figure 4 may be such data retrieval agent 309 according to Figure 3, for example.
4. It is enabled automatic tool improvement. The agents provide feedback on the tool usage, e.g., how useful the data that was retrieved via a specific tool was later. Based on the collected information, the tools itself can be updated using LLM-based code generation and an agent-based quality control workflow including test cases that ensures that the tools still provide the required outputs. Each time an agent employs a tool for one of its tasks, this interaction can be logged in the previously mentioned data storage. It may not only be logged that the tool was used but also its outcome and if it led to the final solution. Since a tool is a function in a predefined programming language that is executed at runtime when the agent invokes it, it can be made use of an LLM's capabilities to write complex codes. It can be provided the existing code for the tool as an input. In addition, it can be provided the task the tool is supposed to accomplish, exemplary outputs, and it can be instructed to first write a test case for the tool. Using unit testing it can be used an evaluation cycle that checks the output of each update an LLM performs on the original tool code and it may only be accepted the change if all tests pass successfully. After using the new version of the tool for some time, it can then be analyzed if the old or the new version of the tool provided the better output or worked better together with the agents on the given task. Alternatively, for critical applications, such as infrastructure applications, the solution can run under human supervision, until a human expert has approved it. After the human expert approval, the old version may be replaced by the new version.
5. Information relevancy ranking is introduced. The agent may perform an LLM-powered ranking of each obtained piece of information by its relevancy for the problem at hand. For example, in a case where there is information available in the drive manual as well as in the database of prior customer support cases, the agent first should try to solve the problem by performing the corrective actions described in the manual. If these are not successful it can consult prior support cases with similar symptoms and analyze if the solution that worked for these use cases could be applied for the problem at hand. This is outlined in more detail above with reference to Figure 1.
6. Information logging is enabled. The DriveAlAgent may log each action performed by itself or one of the spawned agents to ensure full traceability and transparency, enabling an informed human intervention at any point in time. Furthermore, the available log data can then be used to perform advanced analytics, for example, to detect drive problems before they arise. Furthermore, it makes the solutions as provided according to several examples of the present disclosure detectable, as a group of agents will always leave a particular pattern in the log data. This is outlined in more detail above with reference to Figure 2.
7. Data role access model provided. The agent framework may feature a role access model for customer data that controls the agents access and the access of the spawned agents (including RAG process) to the available customer and other sensitive data sources. Here, several scenarios may be possible: (1) The extent of data access granted to the agent may vary based on the service tier selected by the customer. (2) For customers who opt not to share their data, regardless of the reason, the data from resolved support cases will be utilized solely for addressing issues related to that specific customer and will not be employed to assist in resolving problems for other customers. (3) Customer data will be anonymized to enable its use by the DriveAlAgent for supporting other customers' support cases, while safeguarding privacy and confidentiality.

Figure 5 outlines a potential role access model architecture 500 to limit the data available for RAG, so that it is ensured that agents interacting with this data do not have access to information they are not allowed to utilize. In more detail, Figure 5 illustrates an example visualization of a data role access model for data sensitive RAG for generative Al according to several examples of the present disclosure. It shall be noted that the idea underlying the present disclosure could be used for any use case involving generative Al agent and RAG. Furthermore, there are different types of ways that could potentially be used to restrict data access for RAG and agents, Role-Based Access Control, is only one of them. Others are for example, Attribute-Based Access Control, Discretionary Access Control, Rule-Based Access Control, Policy-Based Access Control, and many more.

The solution as provided according to several examples of the present disclosure may in general work for any isolated or siloed data. In shall be noted that in Figure 5, the DriveAlAgent as illustrated in the backend layer may represent (at least part of) such DriveAlAgent as indicated in Figure 3, for example. For example, in Figure 5, the directing agent, which may represent such directing agent 301 of Figure 3, is in communicative connection with an error diagnostic logic provided on a server. A customer, for example a Customer A, may (directly or indirectly) access the error diagnostic logic via an application programming interface (API), the access may be according to the customer's privileges, wherein the customer's privileges may be stored in a user database (DB). The directing agent may obtain or acquire a profile of the customer, i.e. the customer's privileges. The DriveAlAgent may then consider these customer privileges when generating proposals for handling an error for example. For example, the DriveAlAgent may only propose actions to customer A that the customer A is allowed to perform (or is allowed to instruct to be performed) based on the privileges of the customer A. The directing agent may retrieve data from a vector DB, for example to perform a similarity search as already outlined above, a data retrieval agent may retrieve data from the vector DB or a document DB for example, and a quality control agent may retrieve data from still another DB, for example for a DB where criteria or rules for quality assessment are stored.

According to several examples of the present disclosure, several benefits may be obtained. Namely, the disclosed LLM-based agent can be particularly valuable for the use case of drive error diagnosis. Additionally, it can be utilized to enhance other applications, such as automatic encoder configuration. Incorrectly defining parameters during the configuration of an encoder-drive combination may result in drive errors. These errors can be automatically analyzed by the disclosed agent, and the identified solution can then be applied to proceed with the encoder configuration. Use cases may be automated drive error diagnosis and/or as a black box (providing output based on given input) as part of an automated encoder configuration. Moreover, productivity may increase due to less downtime of drives and productivity may increase due to improved performance of drives. Anomaly detection may be improved, for example a detection of drive problems before they occur, and (as part of anomaly detection) reduced drive performance may be detected. Error/performance diagnosis may be triggered, and maintenance may be triggered automatically. Customers can diagnose drive errors faster, better, and easier. Hence, customer satisfaction may be increased. Furthermore, less personal customer support would be required, since the agent can diagnose problems, where the customer previously had no other option than to contact customer support. It may further be created a knowledge database of customer knowledge for drive products and drive & encoder setups, and it may be grown a knowledge database for drive error solutions and performance improvement.

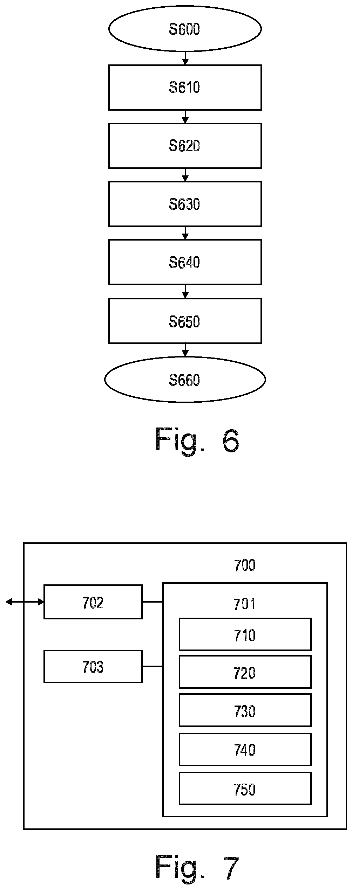

Referring now to Figure 6, Figure 6 illustrates a flowchart indicative of a method according to several examples of the present disclosure. The method is for automating a process of error diagnosis of an industrial drive product in an industrial context. The method may be similar to such method as outlined above with reference to Figure 1.

The method starts in S600.

In S610, the method comprises obtaining, by a generative Al agent, a notification that is associated with an error occurred in the industrial drive product. The generative Al agent may be such directing agent 301 as outlined above with reference to Figure 3.

In S620, the method comprises retrieving, by the generative Al agent, a plurality of pieces of information from one or more data sources, wherein the plurality of pieces of information is associated with the industrial drive product. The retrieving may comprise such retrieval in step S101 as illustrated in Figure 1. The retrieving may comprise such input as illustrated in Figure 3 as input to the directing agent 301. Moreover, the retrieving may further comprise such information gathering as illustrated in S201 in Figure 2.

In S630, the method comprises determining, by the generative Al agent and for a piece of information of the plurality of pieces of information, a relevance in relation to the error.

The determining may comprise such relevancy ranking in step S102 as illustrated in Figure 1.

In S640, the method comprises, for pieces of information of the plurality of pieces of information that are determined to have a relevance above a predetermined relevance threshold, augmenting, by the generative Al agent, the pieces of information. The augmenting may comprise such augmentation in step S103 as illustrated in Figure 1.

In S650, the method comprises generating, by the generative Al agent, a proposal for handling the error based on the augmented pieces of information. The generating may comprise such generation in step S104 as illustrated in Figure 1. The generating may comprise such output as illustrated in Figure 3 as output from the directing agent 301. Moreover, the generating may further comprise such proposing of one or more solutions as illustrated in S202 in Figure 2. Furthermore, after a proposed action or solution is performed, for examples as outlined above with reference to Steps S203 and S203b in Figure 2, it may be checked if the error was solved, as outlined above with reference to Step S204 in Figure 2. If the error was solved, a solution or several solutions that were required to achieve the solving of the error may be determined as a final solution, as indicated in Step S205 in Figure 2. It shall be noted that the generating in Step S650 according to Figure 6 may not need to represent or correspond to the Step S202 in Figure 2, but may represent or correspond to the Step S205 in Figure 2. In more detail, the generating in Step S650 according to Figure 6 may comprise the Steps S202 to S205 as illustrated in Figure 2.

The method ends in S660.

Referring now to Figure 7, Figure 7 illustrates a block diagram schematically showing a data processing apparatus 700 according to several examples of the present disclosure. In particular, according to several examples of the present disclosure, there is provided a data processing apparatus 700 for automating a process of error diagnosis of an industrial drive product in an industrial context. The data processing apparatus 700 comprises one or more processors 701 being configured to carry out the method as indicated according to any of Figures 1 to 3, and and/or to carry out the method as outlined above with reference to Figure 6.

According to several examples of the present disclosure, the data processing apparatus 700 may comprise means to function as such directing agent 301 as outlined above with reference to Figures 3 and 5. According to several examples of the present disclosure, the data processing apparatus 700 may comprise means to function as such DriveAlAgent as outlined above with reference to Figures 3 and 5.

In more detail, according to various examples, a data processing apparatus 700 being configured to carry out the method of Figure 6 may comprise a processing circuitry, a processing function, a processing means, a processing unit or a processor 601, which enables the data processing apparatus 700 to participate in automating a process of error diagnosis of an industrial drive product in an industrial context. The processor 701 may comprise one or more processing portions or functions, wherein the processing portions or functions may be provided as one or more physical or virtual entities. The data processing apparatus 700 may comprise one or more communication interfaces 702. The data processing apparatus 700 may further comprise a memory or memory unit 703 for storing data, programs and/or instructions to be executed by the processor. The memory 703 may be a memory internal to the data processing apparatus 700 or may be a memory external to the data processing apparatus 700, for example at a cloud server. The processor 701 may comprise one or more portions, which enable the data processing apparatus 700 to execute the method of Figure 6 for example. According to several examples of the present disclosure, an obtaining portion 710 may be configured to perform such obtaining according to S610 of Figure 6, a retrieving portion 720 may be configured to perform such retrieving according to S620 of Figure 6, a determining portion 730 may be configured to perform such determining according to S630 of Figure 6, an augmenting portion 740 may be configured to perform such augmenting according to S640 of Figure 6, and a generating portion 750 may be configured to perform such generating according to S650 of Figure 6.

According to several examples of the present disclosure, the respective portions of the data processing apparatus 700 may also be understood as means for carrying out the certain function.

According to several examples of the present disclosure, there is provided a data processing system for automating a process of error diagnosis of an industrial drive product in an industrial context. The data processing system may comprise the data processing apparatus 700 according to Figure 7 and/or may comprise means for carrying out the method according to Figure 6. The data processing system may be such system or architecture 500 as outlined above with reference to Figure 5.

According to several examples of the present disclosure, there is provided an industrial plant comprising the data processing apparatus 700 according to Figure 7 and/or the data processing system as outlined above. The industrial plant may be the industrial plant for which the ML model is trained and/or for which the trained ML model is used or inferred.

According to several examples of the present disclosure, there is provided a computer-readable medium comprising instructions which, when executed by a computing system, causes the computing system to perform the method as indicated above with reference to any of Figures 1 to 3 and/or to perform the method as outlined with reference to Figure 6. The computer-readable medium may be transitory or non-transitory, volatile or non-volatile.

According to several examples of the present disclosure, there is provided a computer program product comprising instructions which, when executed by a computing system, enable or cause the computing system perform the method as indicated above with reference to any of Figures 1 to 3 and/or to perform the method as outlined with reference to Figure 6. The computer program product may comprise a computer-readable medium comprising instructions of the computer program product. The computer-readable medium as mentioned above may have stored thereon the computer program product.

According to several examples of the present disclosure, there is provided a use of the data processing apparatus 700, the data processing system as outlined above, the industrial plant as outlined above, the computer-readable medium as outlined above, and/or the computer program product as outlined above. In particular, there is provided use of the method as outlined with reference to Figure 6.

Optional features of the methods as outlined with reference to any of Figures 1 to 5 or 6 may form part of the data processing apparatus 700, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for automating a process of error diagnosis of an industrial drive product in an industrial context, the method comprising:
obtaining (S610), by a generative artificial intelligence, Al, agent, a notification that is associated with an error occurred in the industrial drive product;
retrieving (S620), by the generative Al agent, a plurality of pieces of information from one or more data sources, wherein the plurality of pieces of information is associated with the industrial drive product;
determining (S630), by the generative Al agent and for a piece of information of the plurality of pieces of information, a relevance in relation to the error;
for pieces of information of the plurality of pieces of information that are determined to have a relevance above a predetermined relevance threshold, augmenting (S640), by the generative Al agent, the pieces of information; and
generating (S650), by the generative Al agent, a proposal for handling the error based on the augmented pieces of information.

2. The method according to claim 1, wherein obtaining the notification comprises at least one of:
- retrieving an error code from the industrial drive product, the error code associated with the error,
- retrieving a log from the industrial drive product, the log associated with the error,
- obtaining an image showing at least a portion of the industrial drive product, the portion associated with the error,
- obtaining a video showing at least a portion of the industrial drive product, the portion associated with the error,
- obtaining an image showing an error message associated with the error,
- obtaining a sound or sound record associated with the error,
- obtaining descriptive text associated with the error, and
- obtaining a user speech associated with the error.

3. The method according to claim 1 or 2, wherein the retrieving from the one or more data sources comprises at least one of:
- retrieving from the industrial drive product,
- retrieving from one or more databases,
- retrieving from one or more documents,
- retrieving from one or more video records, and
- retrieving from one or more sound records.

4. The method according to any of claims 1 to 3, wherein the retrieving from the one or more data sources further comprises: retrieving metadata associated with the retrieved plurality of pieces of information, wherein the metadata are indicative of information on the one or more data sources from which the plurality of pieces of information was retrieved.

5. The method according to any of claims 1 to 4, wherein the determining further comprises: determining the relevance further based on:
- a drive type of the industrial drive product, and/or
- an error code associated with the error, wherein the error code is included in a user input made by a user in response to the error and/or is identified by the generative Al agent from the retrieved plurality of pieces of information.

6. The method according to any of claims 1 to 5, wherein the determining further comprises:
evaluating a piece of information of the plurality of pieces of information against information derivable from at least one of the user input, the drive type of the industrial drive product, different pieces of information of the plurality of pieces of information, the log from the industrial drive product, and the error code; and
determining the relevance based on the evaluating.

7. The method according to any of claims 1 to 6, further comprising:
obtaining, by the generative Al agent, relevance threshold configuration information indicative of at least two predetermined relevance categories of different relevancies, of predetermined classification criteria and of a setting of the predetermined relevance threshold,
wherein determining the relevance for the piece of information further comprises:
classifying the piece of information into one relevance category of the at least two predetermined relevance categories based on the predetermined classification criteria; and
determining whether the one relevance category has a relevance above the predetermined relevance threshold based on the setting of the predetermined relevance threshold.

8. The method according to any of claims 1 to 7, wherein the augmenting the pieces of information comprises at least one of:
- removing white space,
- rephrasing one or more syntaxes according to predetermined syntax rephrasing criteria,
- formatting one or more syntaxes according to predetermined syntax formatting criteria,
- removing duplicate information, and
- combining information that have a similarity above a predetermined similarity threshold.

9. The method according to any of claims 1 to 8, wherein the generative Al agent is a first generative Al agent of a group of generative Al agents, and wherein the method further comprises: providing, by the first generative Al agent, the generated proposal to at least a second generative Al agent of the group of generative Al agents for at least the second generative Al agent to refine the generated proposal.

10. The method according to any of claims 1 to 9, further comprising:
providing, by the generative Al agent, the generated proposal or the refined generated proposal to a user;
receiving, by the generative Al agent, feedback from the user on the generated proposal or on the refined generated proposal; and
performing at least one of the following by the generative Al agent based on the received feedback:
- updating the generated proposal or the refined generated proposal,
- generating a follow-up proposal to the generated proposal or to the refined generated proposal, and
- automatically executing the generated proposal or the refined generated proposal.

11. The method according to any of claims 1 to 10,
wherein the generating the proposal comprises generating one or more proposals; and
wherein the providing the generated proposal or the refined generated proposal to the user comprises providing the generated one or more proposals or the refined generated one or more proposal to the user.

12. The method according to any of claims 1 to 11, further comprising:
implementing a logging system;
logging, by the generative Al agent and/or by one or more generative Al agents of the group of generative Al agents, in the logging system progresses made by the generative Al agent and/or by one or more generative Al agents of the group of generative Al agents in performing the augmenting and/or the generating

13. The method according to any of claims 1 to 12, further comprising:
selecting, by the generative Al agent and/or by one or more generative Al agents of the group of generative Al agents, one or more tools from a predetermined set of tools for performing at least one of the retrieving, the determining, the augmenting the generating and the updating.

14. A data processing apparatus (700) comprising one or more processors being configured to carry out the method according to any of claims 1 to 113

15. A computer program product comprising instructions which, when executed by a computing system, enable and/or cause the computing system to perform the method according to any of claims 1 to 14.
